# EUROPEAN PATENT SPECIFICATION

(11) **EP 3 094 672 B1**
(45) Date of publication and mention of the grant of the patent: **03.10.2018**
(21) Application number: 15705118.6
(22) Date of filing: 15.01.2015
(51) Int. Cl.: C08J 5/18, C08B 37/00, C08L 5/00

(54) **PRODUCTION OF A SOLUTION OF CROSS-LINKED POLY ALPHA-1,3-GLUCAN AND POLY ALPHA-1,3-GLUCAN FILM MADE THEREFROM**
HERSTELLUNG EINER LÖSUNG AUS VERNETZTEM POLY-ALPHA-1,3-GLUCAN UND DARAUS HERGESTELLTER POLY-ALPHA-1,3-GLUCANFILM
PRODUCTION D'UNE SOLUTION DE POLY ALPHA-1,3-GLUCANE RÉTICULÉ ET FILM DE POLY ALPHA-1,3-GLUCANE OBTENU À PARTIR DE CELLE-CI

(30) Priority: 17.01.2014 US 201461928581 P
(43) Date of publication of application: 23.11.2016
(73) Proprietor: E. I. du Pont de Nemours and Company, Wilmington, DE 19805 (US)
(72) Inventor: MASSOUDA, Debora Flanagan, Wilmington, Delaware 19810 (US); MISHRA, Vindhya, Wilmington, Delaware 19803 (US); PERTICONE, Andrea M, Clayton, Delaware 19938 (US)
(74) Representative: Dehns
(86) International application number: PCT/US2015/011546
(87) International publication number: WO 2015/109064

(56) References cited:
- WO-A1-2013/036968

## Description

### FIELD OF THE INVENTION

This invention relates to poly alpha-1,3-glucan films and methods of their preparation. More specifically it relates to dissolution of poly alpha-1,3 glucan in caustic solutions, modification of the caustic solution with boric acid or borates, and preparation of films thereof.

### BACKGROUND

Glucose-based polysaccharides and their derivatives can be of potential industrial application.

Cellulose is a typical example of such a polysaccharide and is comprised of beta-1,4-D-glycosidic linkages of hexopyranose units. Cellulose is used for several commercial applications such as in manufacture of fibers and films (cellophane). Cellulose for industrial applications is derived from wood pulp. Solutioning of wood pulp is a difficult procedure. For cellophane production the most commonly used process for dissolution of cellulose is the 'viscose process' where the cellulose is converted to cellulose xanthate made by treating a cellulose compound with sodium hydroxide and carbon disulfide. The cellulose xanthate solution is extruded into a coagulation bath, where it is regenerated upon coagulation to form a cellulose film. Cellophane film has several desirable attributes like clarity, barrier to oxygen, mechanical strength etc which has resulted in its application as a packaging film. However the disadvantage is the use of this viscose process in cellophane manufacture, which involves toxic chemicals and significant environmental costs.

Amongst polysaccharide polymers, glucan polymers, with alpha-1,3-glycoside linkages, have been shown to possess significant advantages. U.S. Patent No. 7,000,000 disclosed preparation of a polysaccharide fiber comprising a polymer with hexose units, wherein at least 50% of the hexose units within the polymer were linked via alpha-1,3-glycoside linkages, and a number average degree of polymerization of at least 100. A glucosyltransferase enzyme from Streptococcus salivarius (gtfJ) was used to produce the polymer. The polymer alpha-1,3-glucan was acetylated in order to render the polymer soluble in the spinning solvent. The acetylated polymer was then dissolved in a mixture of trifluoro-acetic acid and dichloromethane. From this solution continuous, strong, fibers of glucan acetate were spun. These glucan acetate fibers can subsequently be de-acetylated to form fibers composed of alpha-1,3-glucan.

It would be desireable to make films composed of a polysaccharide alpha-1,3-glucan polymer which have properties comparable to cellophane, without the need for a derivatization step. In addition, elimination of the use of hazardous chemicals such as carbon disulfide required for xanthation of cellulose would be desirable. In addition, identification of methods to modify the rheology of solutions of the polysaccharide alpha-1,3-glucan polymer would allow for increased processibility of these solutions.

### SUMMARY

The present invention is directed toward a process for making a solution of cross-linked poly alpha-1,3-glucan comprising: (a) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or (b) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan, wherein the poly alpha-1,3-glucan is dissolved in the aqueous solvent composition containing cross-linking agent at a concentration from 5 wt % to 20 wt % and wherein the cross-linking agent is a borate ion added in the form of boric acid or a borate salt.

The present invention is also directed toward a solution containing cross-linked poly alpha-1,3-glucan, an aqueous solvent composition with a pH greater than 11 and borate ions with concentrations that create a molar ratio of borate to glucan monomer in the range of 0.001 to 0.3.

The present invention is also directed toward a process for making a poly alpha-1,3-glucan film comprising: (a) making a solution of cross-linked poly alpha-1,3-glucan comprising: (i) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or (ii) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan; wherein the poly alpha-1,3-glucan is dissolved in the aqueous solvent composition containing cross-linking agent at a concentration from 5 wt % to 20 wt % and wherein the cross-linking agent is a borate ion added in the form of boric acid or a borate salt; (b) contacting the solution of cross-linked poly alpha-1,3-glucan to a surface or extruding the solution of cross-linked poly alpha-1,3-glucan; and (c) removing the aqueous solvent composition to form a poly alpha-1,3-glucan film.

The present invention is also directed toward a poly alpha-1,3-glucan film made according to the abovementioned process.

### DETAILED DESCRIPTION

The term "film" used herein refers to a thin, visually continuous material.

The term "packaging film" used herein refers to a thin, visually continuous material partially or completely emcompassing an object.

The terms "poly alpha-1,3-glucan", "alpha-1,3-glucan polymer" and "glucan polymer" are used interchangeably herein. Poly alpha-1,3-glucan is a polymer where the structure of poly alpha-1,3-glucan can be illustrated as follows (where n is 8 or more):

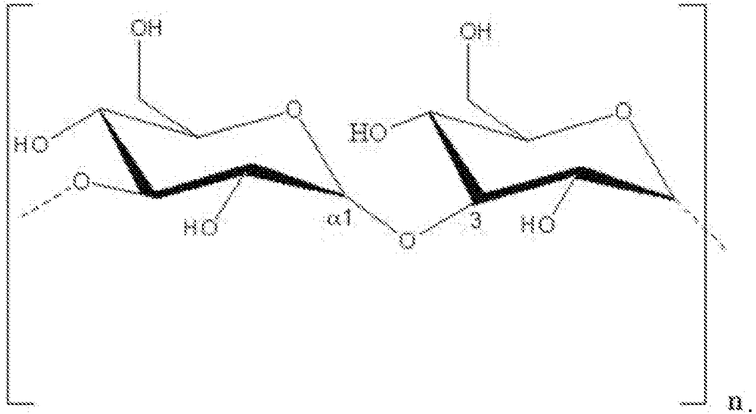

A direct competitor for glucan films would be cellulose films or 'cellophane'. Cellophane suffers from the drawback that the commercial process for production is extremely hazardous since the lack of solvents for cellulose necessitates the use of the 'viscose process' involving carbon disulphide and elimination of hydrogen sulphide, as well as several processing steps. The improved solubility of glucan vs cellulose allowed us to produce Glucan films with alkali solutions. Typically, most industrial film-forming processes are via extrusion, because of lower costs and higher throughput compared to a cast film technique. However, solutions with very low viscosity or highly shear thinning solutions are not amenable to being extruded because of film breakup due to low polymer entanglement. Thus there are requirements on solution rheology that dictate whether it can be extruded or not. Furthermore, solutions can be extruded either directly into a coagulation bath or extruded onto a surface and taken into a coagulation bath, either with or without an air-gap. Presence of a cross-linked network during extrusion increases processability. A cross-linked network can be subjected to greater extensional forces compared to a solution. A cross-linked network may be able to survive extrusion directly into a coagulation bath, while a solution without cross-linking may need a support or may not survive the extrusion process.. A cross-linked network can be though of as only partially liquid, which keeps the polymer chains in a bound network, which can then be oriented under extensional forces. Highly entangled polymer networks may be obtained by increasing polymer concentration in solution, However there is a limit to which we can increase the viscosity of the solutions by increase in polymer concentration. This invention relates to addition of borate ion (such as in boric acid or sodium borate) as a viscosity modifier for solutions of poly alpha-1,3-glucan. It was discovered that addition of small quantities of boric acid and sodium borate could lead to an unexpected increase in viscosity of the solutions of poly alpha-1,3-glucan in aqueous bases. It also led to an increase in elasticity of the solutions. This modified rheology improves the processability and also impacts the nature of the films formed.

Addition of ppm quantities of boric acid lead to significant increase in viscosity of the glucan solutions under certain conditions, specifically when the molar ratio of boric acid to glucan monomer was 0.003 or greater (the exact amount is a function of the polymer concentration and polymer molecular weight). Very low viscosity solutions could be transformed by addition of boric acid or other borate salts into a cross-linked network that was elastic and could be stretched.

Boric acid as an additive has several applications. Boric acid is added to Guar gum solutions to make a fracking liquid. The impact of borate ions on underivatized Glucan solutions was not known. This invention shows that the borate ion can act as a rheology modifier and a cross-linking agent for solutions of alpha (1,3) glucan in caustic solvents.

Poly alpha-1,3-glucan, useful for certain embodiments of the disclosed invention, can be prepared using chemical methods. Alternatively, it can be prepared by extracting it from various organisms, such as fungi, that produce poly alpha-1,3-glucan. Poly alpha-1,3-glucan useful for certain embodiments of the disclosed invention can also be enzymatically produced from renewable resources, such as sucrose, using one or more glucosyl- transferase (e.g., gtfJ) enzyme catalysts found in microorganisms as described in U.S. Patent Application No. 61/532,714 published as U.S. Patent Application Publication No. 2013/0244288.

A solution of poly alpha-1,3-glucan can be prepared in aqueous base solvents such as aqueous sodium hydroxide and aqueous potassium hydroxide. The solvent compositions include but are not limited to a mixture of NaOH in water (where the NaOH composition typically ranges from 4 to 5 wt%), a mixture of KOH (typically 7.5 wt%) in water, and a mixture of tetraethyl ammonium hydroxide in water (typically 20 wt%). Poly alpha-1,3-glucan is mixed into the solvent by application of shear. The concentration of the solution poly alpha-1,3-glucan ranges from 5 wt % to 20 wt %, preferably about 5 wt % to about 15 wt %, more preferably about 5 wt % to about 13 wt % and most preferably about 7 wt % to about 10%.

Glucan has a limited degree of solubility in these caustic solutions. The concentration of polymer in solution cannot be increased above a certain value. A light degree of cross-linking enables one to manipulate the rheology to improve processing, independent of the polymer concentration. It is believed that adding compounds containing borate introduces the opportunity for transient cross-links by association between borate and the -OH groups on glucan. Sufficient levels of these transient cross-links create a lightly cross-linked solution with increased viscosity and/or increased elasticity. For this purpose, lightly cross-linked is defined as having 1 to 6 moles of reactive agent (in this case, borate ion) per polymer chain. For a polymer with a degree of polymerization of 1000, that would be a molar ratio of 0.001 to 0.006 moles borate ion per moles of glucan monomer. The borate ion is added from boric acid or a borate salt.

A preferred method of preparing a solution of poly alpha-1,3 glucan is to slurry the poly alpha-1,3 glucan in water, and then add concentrated base solution and mix till dissolution. In order to prepare the cross-linked network, the borate ion (such as in the form of sodium borate or boric acid) can be added to the solution at various times. It can be dissolved in the water used to slurry the polymer, or in the concentrated base solution. It can also be added in powder form to a solution of poly alpha-1,3 glucan. Upon addition of appropriate amount of salt, the solution increases in viscosity to form a cross-linked network. In some instances, a slight change in solution color was observed upon addition of the borate salt.

This cross-linked network can then be further used to form objects. In one embodiment of this present invention, the cross-linked solution can be used to form films. The films are produced by casting the solution onto a substrate using a rod coater or a draw down coater but can also be produced by other solution film casting methods such as extrusion through a slot die. Due to lack of availability of film extruding equipment, films were prepared only by casting method, however translation into film extrusion will be obvious to those familiar with the art. The substrates include but are not limited to glass (coated with surfactant or without) and polyester films. The formation of the film from the solution involves primarily removal of the aqueous base composition from the film. Post casting, the solution issubject to a series of drying steps that include air drying, coagulation, washing, air-drying and peeling off the substrate. For example, the solution may be cast, then subject to coagulation to remove the aqueous solvent composition and form the film, then subject to washing and drying. Prior to coagulation, the film may be air dried to remove some or all of the water. The coagulation media may be water or dilute acids or alcohols. The coagulation and washing step removes the solvent composition from the film, but may also remove the borate ions. The film may be heated and may be plasticized by immersing in a solution of a plasticizing agent (such as 10 wt% glycerol or ethylene glycol in water or alcohol). The exact sequence of steps is varied to get films of different properties. It should be noted that depending on the solvent removal technique, some residual solvent composition or its constituents may be present in small amounts. Thus, some amount of residual borate salt may be present in the film after formation. Depending on the level of residual borate ion, the presence of this residual salt may impact film properties. For examples, a light degree of cross-linking because of the borate ion may also inhibit the glucan polymer mobility enough to prevent spherulite formation during film drying and/or rinsing. It may increase film strength and/or toughness or resistance to re-dissolution in solvents. In the absence of borate ions, glucan films coagulated with water under the same process conditions are hazy and brittle. The presence of borate may inhibit crystallization of the glucan polymer chains and lower its mobility in presence of water, reduce haziness and brittleness during water coagulation.

Depending on the process utilized, the films thus obtained can be clear and transparent, or hazy. They can have a glossy or a matte appearance. They can be flexible and exhibit good dead fold characteristics. They can be twisted and dyed. The films with low crystalline content are clearer. The films formed by methanol coagulation are primarily amorphous and are the clearest films.

This invention relates to a process for making a solution of cross-linked poly alpha-1,3-glucan comprising: (a) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or (b) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan, wherein the poly alpha-1,3-glucan is dissolved in the aqueous solvent composition containing cross-linking agent at a concentration from 5 wt % to 20 wt %. The aqueous solvent composition can be selected from the group consisting of aqueous sodium hydroxide, aqueous potassium hydroxide, and aqueous tetraethyl ammonium hydroxide. The cross-linking agent is a borate ion added in the form of boric acid or a borate salt. The solution of cross-linked poly alpha-1,3-glucan has a molar ratio of cross-linking agent to glucan monomer of about 0.001 to about 0.3.

The invention also relates to a solution containing cross-linked poly alpha-1,3-glucan, an aqueous solvent composition with a pH greater than 11 and borate ions with concentrations that create a molar ratio of borate to glucan monomer in the range of 0.001 to 0.3.

The invention further relates to a process for making a poly alpha-1,3-glucan film comprising: (a) making a solution of cross-linked poly alpha-1,3-glucan comprising: (i) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or (ii) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan; wherein the poly alpha-1,3-glucan is dissolved in the aqueous solvent composition containing cross-linking agent at a concentration from 5 wt % to 20 wt % and wherein the cross-linking agent is a borate ion added in the form of boric acid or a borate salt; (b) contacting the solution of cross-linked poly alpha-1,3-glucan to a surface or extruding the solution of cross-linked poly alpha-1,3-glucan; and (c) removing the aqueous solvent composition to form a poly alpha-1,3-glucan film. The process for removing the aqueous solvent composition can comprise an optional evaporation step, followed by coagulation in water, dilute acid or alcohol, followed by additional wash steps, and a final drying step to form a dry film.

The invention still further relates to a poly alpha-1,3-glucan film made according to the abovementioned process.

### TEST METHODS

In the non-limiting examples that follow, the following test methods were employed to determine various reported characteristics and properties.

Degree of Polymerization (DP) was determined by the Multidetector Size Exclusion Chromatography (SEC) method . This method was used to measure molecular characteristics of glucan polymers (average molecular weights and degree of polymerization, molecular weight distribution and polydispersity index (PDI)). The chromatographic system used was Alliance™ 2695 separation module from Waters Corporation (Milford, MA) coupled with three on-line detectors: differential refractometer (DR) 2410 from Waters, multiangle light scattering photometer Heleos™ 8+ from Wyatt Technologies (Santa Barabara, CA) and differential capillary viscometer ViscoStar™ from Wyatt. The software packages used for data reduction were Empower™ version 3 from Waters (column calibration with broad glucan standard, DR detector only) and Astra version 6 from Wyatt (triple detection method without column calibration). Four SEC styrene-divinyl benzene columns from Shodex (Japan) were used - two linear KD-806M, KD-802 and KD-801 to improve resolution at low molecular weight region of a polymer distribution. The mobile phase was N, N'- Dimethyl Acetamide (DMAc) from J.T Baker, Phillipsburg, NJ with 0.11% LiCI (Aldrich, Milwaukee, WI). The chromatographic conditions were as follows: Temperature at column and detector compartments: 50 °C, temperature at sample and injector compartments: 40 °C, flow rate: 0.5 ml/min, injection volume: 100 µl. The sample preparation targeted 0.5 mg/mL sample concentration in DMAc with 5% LiCI, shaking overnight at 100C. After dissolution, polymer solution can be stored at room temperature.

Thickness of the film was determined using a Mitutoyo micrometer, No. 293-831 and was reported in mm.

### Preparation for Tensile Testing

Films were measured with a ruler and 1 "x3" (2.5 cm x 7.5 cm) strips were cut using a comfort loop rotary cutter by Fiskars, No. 195210-1001. The samples were then transported to the testing lab where room conditions were 65% relative humidity and 70 °F +/- 2 °F (21 °C +/- 1 °C). The sample weight was measured using a Mettler balance model AE240.

Tensile Properties were measured on an Instron 5500R Model 1122, using 1" (2.5 cm) grips, and a 1" (2.5 cm) gauge length, in accordance with ASTM D882-09. Tensile properties were reported in terms of maximum tensile stress and toughness and were reported in MPa.

### EXAMPLES

### Preparation of Poly alpha-1,3-glucan

Poly alpha-1,3-glucan using a gtfJ enzyme preparation was prepared as described in U.S. Patent Application Publication No. 2013/0244288.

### The following abbreviations were used in the Examples

"DI water" is deionized water; "MPa" is megapascal; "NaOH" is sodium hydroxide; "KOH" is potassium hydroxide; "mm" is millimeters; "ml" is millilters; "mg" is milligrams; "L" is microliters; "wt %" is weight percent; "ppm" is parts per million; "gf" is grams force; "gsm" is grams per square meter; "cm" is centimeter; "cP" is centiPoise; "Mn" is number average molecular weight.

"PDI" is the polydispersity index

"DPw" is weight average degree of polymerization;

### Materials and General Methods

Sodium hydroxide, potassium hydroxide and sulphuric acid were obtained from EMD Chemicals (Billerica, MA). Urea and tetraethyl ammonium hydroxide, were obtained from Sigma Aldrich (St. Louis, MO). Methanol was from B.D.H Middle East (Dubai, UAE). Glycerol was obtained from Acros Organics (Pittsburgh, PA).

### Solution Preparation

Solutions were mixed with either an overhead stirrer, magnetic stir bars or with a high shear mixer. After thorough mixing, solutions were transferred to plastic centrifuge tubes and centrifuged using the Marathon 6K centrifuge by Fisher Scientific. Viscosity of the solution was measured using Brookfield Engineering laboratories Synchro-Lectric Viscometer, Model RVT.

### Example 1

### Effect of Boric Acid Addition on Solutions of Glucan Polymer

A solvent mixture of composition 7.5 wt % KOH was made by stirring KOH into DI water using a stir bar. A well mixed solution containing 6.6 wt% glucan DPw 1250 was prepared by dispersing the polymer in the KOH solution and stirring with a magnetic stir bar overnight. The solution was divided into different parts. Different amounts of boric acid were added to different parts and mixed in by stirring. The viscosity of the solutions were measured as follows: the solutions were poured into graduated centrifuge vials, centrifuged to remove all air bubbles, turned over and the time needed for the solution to travel between the 15 ml and the 45 ml mark was noted. The viscosity of the solution was taken to be proportional to the time divided by the distance between the 15 ml and 45 ml mark. The percentage increase in viscosity was calculated by the percentage increase in time compared to the solution without any boric acid addition. Similar studies were carried out using a 7.7 wt% and a 10 wt% solution of the same polymer. The results are shown in the Table.

**Table**

| **Effect of Boric Acid Addition on Solutions of Glucan Polymer DPw 1250** | | | | |
|---|---|---|---|---|
| Experiment | % Glucan in solution | % Boric acid in solution | Molar ratio boric acid: glucan | % Increase in viscosity compared to control |
| Control | 6.6 | 0 | 0 | 0 |
| Boric addition 1 | 6.6 | 0.15 | 0.05 | None observable |
| Boric addition 2 | 6.6 | 0.47 | 0.18 | 65 |
| Boric addition 3 | 6.6 | 0.85 | 0.34 | Solution gelled, did not flow |
| Control | 7.6 | 0 | 0 | 0 |
| Boric addition 1 | 7.6 | 0.05 | 0.02 | 23 |
| Boric addition 2 | 7.6 | 0.08 | 0.03 | 55 |
| Boric addition 3 | 7.6 | 0.18 | 0.06 | 502 |
| Boric addition 4 | 7.6 | 0.39 | 0.13 | Solution gelled, did not flow |
| Boric addition 5 | 7.6 | 0.54 | 0.18 | Solution gelled, did not flow |
| Control | 10 | 0.013 | 0.003 | 0 |
| Boric addition 1 | 10 | 0.102 | 0.027 | 105 |
| Boric addition 2 | 10 | 0.149 | 0.039 | Solution gelled, did not flow |

Similar tests were carried out with glucan polymers of DPw 550, 800 and 1050. An increase in viscosity was seen in all cases. A solution was made of composition 9% Glucan DPw 550, 6.8%KOH and rest water. The zero-shear viscosity of the solution was measured by a Brookfield viscometer and found to be 444 cP. A threadline could not be pulled up by a spatula dipped into the solution.To 18.3 gm of this solution, 0.072 gm of boric acid powder was mixed in. The concentration of boric acid in the solution was 0.39%. The zero-shear viscosity of the solution was measured by a Brookfield viscometer and found to be 2100 cP. Thus the solution viscosity increased by about 5 times.The solution also became more elastic. A threadline could be pulled up by a spatula dipped into the solution. Increasing the boric acid concentration to about 0.9 wt% of the solution resulted in a gelled solution that did not flow. This gel was found to be elastic and recovered its shape after being subject to compression.

### Example 2

### Films from Solutions of Glucan Polymer with DPw 1050 Modified with Boric Acid, Water Coagulation

A solvent mixture of composition 20 wt % KOH was made by stirring KOH into DI water using a stir bar. A well-mixed solution containing 10 wt% Glucan DPw 1050 was prepared by dispersing the polymer in water for 5 minutes in a round bottom flask using an overhead stirrer and glass stirring rod with a half-moon paddle to create a slurry. The above mentioned solvent mixture was added to the polymer slurry so that the final concentration of the solvent mixture was 7.5 wt % KOH in water. The polymer dissolved in the solvent after stirring for 2 hours. Boric acid was slowly added to the solution with constant stirring to give a molar ratio of 0.006, boric acid to glucan. The concentration of boric acid in the solution was 0.02 wt % based on the total solution. The solution was allowed to stir for 20 additional minutes. The solution was centrifuged to remove air bubbles. A film was cast by pouring a controlled amount of solution onto a glass plate, and then drawn down using a 254 micron rod on the rod-coater. The film was allowed to dry in air for 2 hours. It was then placed in a water bath and left to soak overnight. The film was removed from the bath and allowed to dry. It was then placed in water for 5 seconds, peeled from the glass plate and allowed to air dry on a polyethylene sheet. Thus obtained film had a thickness of 21.59 microns, appeared slightly hazy to the human eye, max strain of 8%, tensile strength of 25.6 MPa, and a toughness of 1 MPa.

### Example 3a

### Films from Solutions of Glucan Polymer with DPw 1050 Modified with Boric Acid, with Methanol Coagulation

A solution was prepared in the same way as Example 1. A film was cast by pouring a controlled amount of solution onto a glass plate, and then drawn down using a 254 micron rod on the rod-coater. The film was allowed to dry in air for 2 hours. It was then placed in a methanol bath and left to soak overnight. The film was removed from the bath and allowed to dry. It was then placed in water for 5 seconds, peeled from the glass plate and allowed to air dry on a polyethylene bag. Thus obtained film had a thickness of 20.32 micron, appeared clear to the human eye, had max strain of 13%, tensile strength of 25 MPa and toughness of 2 MPa.

### Example 3b

### Films from Solutions of Glucan Polymer with DPw 1250 Modified with Boric acid, with Methanol Coagulation

A solvent mixture of composition 20 wt % KOH was made by stirring KOH into DI water using a stir bar. A well mixed solution containing 10 wt% Glucan DPw 1250 was prepared by dispersing the polymer in water for 5 minutes in a round bottom flask using an I overhead stirrer and glass stirring rod with a half moon paddle to create a slurry. The above mentioned 20% KOH solvent mixture was added to the polymer slurry so that the final concentration of the solvent mixture was 7.5 wt % KOH. The polymer dissolved in the solvent after stirring for 2 hours. Boric acid was slowly added to the solution with constant stirring to give a molar ratio of 0.006, boric acid to glucan (0.022 wt % based on the total solution). The solution was allowed to stir for 20 additional minutes. The solution was centrifuged to remove air bubbles and cast immediately or stored at -5 °C till use. A film was cast by pouring a controlled amount of solution onto a glass plate, and then drawn down using a doctor blade. The film was allowed to dry in air for 2 hours. It was then placed in a methanol bath and left to soak overnight. The film was removed from the bath and allowed to dry. It was then placed in water for 5 seconds, peeled from the glass plate and allowed to air dry on a cleanroom wipe. Thus obtained film had a thickness of 58.42 micron, appeared clear to the human eye, exhibited max strain of 24%, and breaking stress of 50 MPa. The toughness of the film thus formed was 10 MPa.

## Claims

1. A process for making a solution of cross-linked poly alpha-1,3-glucan comprising:
(a) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or
(b) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan;
wherein the poly alpha-1,3-glucan is dissolved in the aqueous solvent composition containing cross-linking agent at a concentration from 5 wt % to 20 wt % and wherein the cross-linking agent is a borate ion added in the form of boric acid or a borate salt.

2. The process according to claim 1, wherein the aqueous solvent composition is selected from the group consisting of aqueous sodium hydroxide, aqueous potassium hydroxide, and aqueous tetraethyl ammonium hydroxide.

3. The process according to claim 1, wherein the solution of cross-linked poly alpha-1,3-glucan has a molar ratio of cross-linking agent to glucan monomer of 0.001 to 0.3.

4. A solution containing cross-linked poly alpha-1,3-glucan, an aqueous solvent composition with a pH greater than 11 and borate ions with concentrations that create a molar ratio of borate to glucan monomer in the range of 0.001 to 0.3.

5. A process for making a poly alpha-1,3-glucan film comprising:
(a) making a solution of cross-linked poly alpha-1,3-glucan comprising:
(i) dissolving poly alpha-1,3-glucan in an aqueous solvent composition that has a pH greater than 11 to provide a solution of poly alpha-1,3-glucan and then adding a cross-linking agent to cross-link the poly alpha-1,3-glucan; or
(ii) adding a cross-link agent to an aqueous solvent composition that has a pH greater than 11 and then dissolving poly alpha-1,3-glucan in the aqueous solvent composition containing the cross-linking agent to cross-link the poly alpha-1,3- glucan;
wherein the poly alpha-1,3-glucan is dissolved in the aqueous solvent composition containing cross-linking agent at a concentration from 5 wt % to 20 wt % and wherein the cross-linking agent is a borate ion added in the form of boric acid or a borate salt;
(b) contacting the solution of cross-linked poly alpha-1,3-glucan to a surface or extruding the solution of cross-linked poly alpha-1,3-glucan; and
(c) removing the aqueous solvent composition to form a poly alpha-1,3-glucan film.

6. The process according to claim 5, wherein the solution of cross-linked poly alpha-1,3-glucan has a molar ratio of cross-linking agent to glucan monomer of 0.001 to 0.3.

7. The process according to claim 5, wherein removing the aqueous solvent composition comprises an optional evaporation step, followed by coagulation in water, dilute acid or alcohol, followed by additional wash steps, and a final drying step to form a dry film.

8. The process according to claim 7, wherein the alcohol is methanol.

9. A poly alpha-1,3-glucan film made according to claim 5.

## Patentansprüche

1. Verfahren zur Herstellung einer Lösung von vernetztem Poly-alpha-1,3-glucan, umfassend:
(a) Lösen von Poly-alpha-1,3-glucan in einer wässrigen Lösungsmittelzusammensetzung, die einen pH-Wert größer als 11 aufweist, zwecks Bereitstellung einer Lösung von Poly-alpha-1,3-glucan und dann Zugeben eines Vernetzungsmittels, um das Poly-alpha-1,3-glucan zu vernetzen; oder
(b) Zugeben eines Vernetzungsmittels zu einer wässrigen Lösungsmittelzusammensetzung, die einen pH-Wert größer als 11 aufweist, und dann Lösen von Poly-alpha-1,3-glucan in der das Vernetzungsmittel enthaltenden wässrigen Lösungsmittelzusammensetzung, um das Poly-alpha-1,3-glucan zu vernetzen;
wobei das Poly-alpha-1,3-glucan in der wässrigen Lösungsmittelzusammensetzung, die Vernetzungsmittel enthält, in einer Konzentration von 5 Gew.-% bis 20 Gew.-% gelöst wird und wobei das Vernetzungsmittel ein Boration ist, das in der Form von Borsäure oder einem Boratsalz zugegeben wird.

2. Verfahren nach Anspruch 1, wobei die wässrige Lösungsmittelzusammensetzung aus der Gruppe ausgewählt ist, die aus wässrigem Natriumhydroxid, wässrigem Kaliumhydroxid und wässrigem Tetraethylammoniumhydroxid besteht.

3. Verfahren nach Anspruch 1, wobei die Lösung von vernetztem Poly-alpha-1,3-glucan ein Molverhältnis von Vernetzungsmittel zu Glucanmonomer von 0,001 zu 0,3 aufweist.

4. Lösung, enthaltend vernetztes Poly-alpha-1,3-glucan, eine wässrige Lösungsmittelzusammensetzung mit einem pH-Wert größer als 11 und Borationen mit Konzentrationen, die ein Molverhältnis von Borat zu Glucanmonomer im Bereich von 0,001 bis 0,3 schaffen.

5. Verfahren zur Herstellung einer Poly-alpha-1,3-glucan-Folie, umfassend:
(a) Herstellen einer Lösung von vernetztem Poly-alpha-1,3-glucan, umfassend:
(i) Lösen von Poly-alpha-1,3-glucan in einer wässrigen Lösungsmittelzusammensetzung, die einen pH-Wert größer als 11 aufweist, zwecks Bereitstellung einer Lösung von Poly-alpha-1,3-glucan und dann Zugeben eines Vernetzungsmittels, um das Poly-alpha-1,3-glucan zu vernetzen; oder
(ii) Zugeben eines Vernetzungsmittels zu einer wässrigen Lösungsmittelzusammensetzung, die einen pH-Wert größer als 11 aufweist, und dann Lösen von Poly-alpha-1,3-glucan in der das Vernetzungsmittel enthaltenden wässrigen Lösungsmittelzusammensetzung, um das Poly-alpha-1,3-glucan zu vernetzen;
wobei das Poly-alpha-1,3-glucan in der wässrigen Lösungsmittelzusammensetzung, die Vernetzungsmittel enthält, in einer Konzentration von 5 Gew.-% bis 20 Gew.-% gelöst wird und wobei das Vernetzungsmittel ein Boration ist, das in der Form von Borsäure oder einem Boratsalz zugegeben wird;
(b) In-Kontakt-Bringen der Lösung von vernetztem Poly-alpha-1,3-glucan mit einer Fläche oder Extrudieren der Lösung von vernetztem Poly-alpha-1,3-glucan; und
(c) Entfernen der wässrigen Lösungsmittelzusammensetzung, um eine Poly-alpha-1,3-glucan-Folie zu bilden.

6. Verfahren nach Anspruch 5, wobei die Lösung von vernetztem Poly-alpha-1,3-glucan ein Molverhältnis von Vernetzungsmittel zu Glucanmonomer von 0,001 zu 0,3 aufweist.

7. Verfahren nach Anspruch 5, wobei Entfernen der wässrigen Lösungsmittelzusammensetzung einen optionalen Evaporationsschritt, gefolgt von Koagulation in Wasser, verdünnter Säure oder Alkohol, gefolgt von zusätzlichen Waschschritten, und einen abschließenden Trocknungsschritt zwecks Bildung einer trockenen Folie umfasst.

8. Verfahren nach Anspruch 7, wobei der Alkohol Methanol ist.

9. Poly-alpha-1,3-glucan-Folie, hergestellt nach Anspruch 5.

## Revendications

1. Procédé de fabrication d'une solution de poly alpha-1,3-glucane réticulé comprenant:
(a) la dissolution de poly alpha-1,3-glucane dans une composition aqueuse de solvant qui présente un pH supérieur à 11 pour fournir une solution de poly alpha-1,3-glucane et ensuite l'addition d'un agent de réticulation pour réticuler le poly alpha-1,3-glucane; ou
(b) l'addition d'un agent de réticulation à une composition aqueuse de solvant qui présente un pH supérieur à 11 et ensuite la dissolution du poly alpha-1,3-glucane dans la composition aqueuse de solvant contenant l'agent de réticulation pour réticuler le poly alpha-1,3-glucane;
le poly alpha-1,3-glucane étant dissous dans la composition aqueuse de solvant contenant l'agent de réticulation sous une concentration de 5 % en pds à 20 % en pds et l'agent de réticulation étant un ion borate ajouté sous la forme d'acide borique ou d'un sel borate.

2. Procédé selon la revendication 1, la composition aqueuse de solvant étant sélectionnée dans le groupe constitué de l'hydroxyde de sodium aqueux, de l'hydroxyde de potassium aqueux, et de l'hydroxyde de tétraéthyl ammonium aqueux.

3. Procédé selon la revendication 1, la solution de poly alpha-1,3-glucane réticulé présentant un rapport molaire d'agent de réticulation au monomère de glucane de 0,001 à 0,3.

4. Solution contenant du poly alpha-1,3-glucane réticulé, une composition aqueuse de solvant présentant un pH supérieur à 11 et des ions borates sous des concentrations qui créent un rapport molaire du borate au monomère de glucane situé dans la plage de 0,001 à 0,3.

5. Procédé de fabrication d'un film de poly alpha-1,3-glucane comprenant:
(a) la fabrication d'une solution de poly alpha-1,3-glucane réticulé comprenant:
(i) la dissolution de poly alpha-1,3-glucane dans une composition aqueuse de solvant qui présente un pH supérieur à 11 pour fournir une solution de poly alpha-1,3-glucane et ensuite l'addition d'un agent de réticulation pour réticuler le poly alpha-1,3-glucane; ou
(ii) l'addition d'un agent de réticulation à une composition aqueuse de solvant qui présente un pH supérieur à 11 et ensuite la dissolution du poly alpha-1,3-glucane dans la composition aqueuse de solvant contenant l'agent de réticulation pour réticuler le poly alpha-1,3-glucane;
le poly alpha-1,3-glucane étant dissous dans la composition aqueuse de solvant contenant l'agent de réticulation sous une concentration de 5 % en pds à 20 % en pds et l'agent de réticulation étant un ion borate ajouté sous la forme d'acide borique ou d'un sel borate;
(b) la mise en contact de la solution de poly alpha-1,3-glucane réticulé avec une surface ou l'extrusion de la solution de poly alpha-1,3-glucane réticulé; et
(c) l'élimination de la composition aqueuse de solvant pour former un film de poly alpha-1,3-glucane.

6. Procédé selon la revendication 5, la solution de poly alpha-1,3-glucane réticulé présentant un rapport molaire d'agent de réticulation au monomère de glucane de 0,001 à 0,3.

7. Procédé selon la revendication 5, l'élimination de la composition aqueuse de solvant comprenant une étape d'évaporation facultative, suivie de la coagulation dans de l'eau, de l'acide dilué ou de l'alcool, suivi d'étapes de lavage additionnelles, et d'une étape de séchage finale pour former un film sec.

8. Procédé selon la revendication 7, l'alcool étant le méthanol.

9. Film de poly alpha-1,3-glucane selon la revendication 5.
